# DEMANDE DE BREVET EUROPEEN

(11) **EP 3 885 614 A1**
(43) Date de publication de la demande: **29.09.2021**
(21) Numéro de dépôt: 20305305.3
(22) Date de dépôt: 23.03.2020
(51) Int. Cl.: F16K 3/08, F16K 31/528, F16K 31/524, F16K 31/06, F16L 37/367, F16K 31/52

(54) **VANNES POUR UN CIRCUIT FLUIDIQUE AMÉLIORÉ, SYSTÈME DE CONNEXION DE CONDUITES DE FLUIDE COMPORTANT UNE TELLE VANNE**

(71) Demandeur: de Rochefort, Florian, 45620 Cerdon (FR); Senoble, Marc, 1050 Ixelles (BE)
(72) Inventeur: de ROCHEFORT, Florian, 45620 CERDON (FR)
(74) Mandataire: Lavoix

(57) **Abrégé**

La vanne (5) pour un circuit fluidique comporte un obturateur (55) comprenant deux disques ajourés coaxiaux montés mobiles à rotation, selon un axe de rotation (X) passant par un centre des disques et perpendiculaire aux disques, l'un par rapport à l'autre et en appui l'un sur l'autre, l'obturateur s'étendant en travers d'un tronçon (90) d'écoulement, l'un des disques ajourés étant monté mobile à coulissement seul selon l'axe de rotation dans le tronçon de manière étanchée avec une paroi périphérique (50) du tronçon et entrainant l'autre des disques ajourés dans le coulissement, l'autre des disques ajourés comportant un suiveur de came (552) et la paroi périphérique du tronçon comportant un chemin de came (51), le suiveur coopérant avec le chemin pour positionner les deux disques l'un par rapport à l'autre dans des positions prédéfinies relatives lors d'un mouvement de rotation des disques l'un par rapport à l'autre.

## Description

### DOMAINE TECHNIQUE DE L'INVENTION

L'invention concerne une vanne pour un circuit fluidique comportant un obturateur s'étendant au travers d'une section d'écoulement de fluide. D'autre part, l'invention concerne aussi un système de connexion entre des première et deuxième conduites de fluide comprenant au moins une telle vanne. Au surplus, l'invention concerne un robinet de distribution comportant une telle vanne.

### ETAT DE LA TECHNIQUE ANTERIEURE

Actuellement, dans le domaine des raccords sécurisés, il existe de nombreuses vannes qui permettent d'assurer en cas de déconnexions intempestives de réaliser une obturation d'urgence de la conduite ou du moins du tronçon d'écoulement à travers lequel la vanne s'étend. Par exemple, dans le document US7044155, il est décrit une telle vanne de sécurité destinée à des raccords entre deux conduites fluidiques qui sont destinées à être sécurisées en cas de déconnexions intempestives. Ce document décrit des vannes relativement complexes avec de nombreuses pièces en mouvement dont la réalisation et le coût sont élevés. D'autre part, les nombreuses pièces en mouvement nécessitent d'assurer de nombreuses étanchéités entre elles. Ceci conduit à de nombreuses sources de défaillances potentielles dans le fonctionnement de tels raccords sécurisés.

Il est donc nécessaire de pouvoir fournir des vannes pour des raccords sécurisés qui présentent une sécurité plus élevée quant à des risques de défaillances donc de minimiser le nombre de pièces réalisant cette vanne, tout en étant simple.

### EXPOSE DE L'INVENTION

Un but de l'invention est donc de fournir une vanne pour un circuit fluidique comportant un obturateur s'étendant au travers d'une section d'écoulement de fluide de la vanne qui présente une structure simplifiée.

A cette fin, il est prévu selon l'invention, une vanne pour un circuit fluidique comportant un obturateur comprenant deux disques ajourés coaxiaux montés mobiles à rotation, selon un axe de rotation passant par un centre des disques et perpendiculaire aux disques, l'un par rapport à l'autre et en appui l'un sur l'autre, l'obturateur s'étendant en travers d'une section d'un tronçon d'écoulement de fluide de la vanne, l'un des disques ajourés étant monté mobile à coulissement seul selon l'axe de rotation dans le tronçon de manière étanchée avec une paroi périphérique du tronçon et entrainant l'autre des disques ajourés dans le coulissement, l'autre des disques ajourés comportant un suiveur de came et la paroi périphérique du tronçon comportant un chemin de came, le suiveur de came coopérant avec le chemin de came de sorte à positionner les deux disques ajourés l'un par rapport à l'autre dans des positions prédéfinies relatives lors d'un mouvement de rotation des disques ajourés l'un par rapport à l'autre.

Avantageusement, mais facultativement, la vanne selon l'invention présente au moins l'une des caractéristiques techniques suivantes :
- les deux disques ajourés comprennent des ouvertures complémentaires agencées de sorte à venir en regard l'une de l'autre dans au moins une des positions prédéfinies relatives ;
- le chemin de came comporte des points de retenue du suiveur de came agencés de sorte à maintenir des positions prédéfinies relatives entre les deux disques ajourés ;
- la vanne comporte en outre des moyens de rappel élastiques agissant à l'encontre d'un coulissement des disques ajourés dans le tronçon ;
- les moyens de rappel élastiques sont agencés de sorte à positionner les deux disques ajourés dans une position prédéfinie de fermeture dans laquelle les deux disques ajourés obturent le tronçon d'écoulement de fluide de la vanne ;
- la vanne comprend une tige de commande et de guidage d'un coulissement des disques ajourés dans le tronçon ;
- la tige de commande et de guidage comporte des moyens de motorisation d'un coulissement des disques ajourés dans le tronçon ;
- les moyens de motorisation comportent un électroaimant ; et,
- une portion de la tige de commande et de guidage forme ou comporte un noyau de l'électroaimant.

Il est aussi prévu selon l'invention, un système de connexion entre les première et deuxième conduites de fluide comportant un premier raccord monté sur une extrémité de la première conduite et un deuxième raccord monté sur une extrémité de la deuxième conduite, les premier et deuxième raccords coopérant l'un avec l'autre de sorte à réaliser une connexion entre les première et deuxième conduites de fluide, l'un parmi les premier et deuxième raccords comportant une première vanne selon l'invention présentant au moins l'une des caractéristiques techniques précitées.

Avantageusement, mais facultativement, le système de connexion selon l'invention présente au moins l'une des caractéristiques techniques suivantes :
- l'autre parmi les premier et deuxième raccords comprend des moyens de mise en mouvement du suiveur de came le long du chemin de came de la première vanne, lors d'une réalisation d'une connexion entre les première et deuxième conduites de fluide ;
- l'autre parmi les premier et deuxième raccords comporte une deuxième vanne selon l'invention présentant au moins l'une des caractéristiques techniques précitées ;
- la deuxième vanne comporte les moyens de mise en mouvement du suiveur de came le long du chemin de came de la première vanne, lors d'une réalisation d'une connexion entre les première et deuxième conduites de fluide ; et,
- les moyens de mise en mouvement du suiveur de came le long du chemin de came de la première vanne, lors d'une réalisation d'une connexion entre les première et deuxième conduites de fluide, sont agencés de sorte à mettre en mouvement le suiveur de came le long du chemin de came de la deuxième vanne, lors de la réalisation de ladite une connexion entre les première et deuxième conduites de fluide.

De plus, il est prévu selon l'invention un robinet de distribution pour un circuit fluidique, comportant une vanne selon l'invention présentant au moins l'une des caractéristiques techniques précitées.

### BREVE DESCRIPTION DES FIGURES

D'autres caractéristiques et avantages de l'invention ressortiront à la lecture de la description qui suit d'un mode de réalisation de l'invention. Aux dessins annexés :
- la figure 1 est une vue schématique en coupe longitudinale d'un premier raccord d'un système de connexion selon l'invention, le raccord comportant une vanne selon l'invention ;
- la figure 2 est une vue schématique en coupe axiale d'un deuxième raccord d'un système de connexion selon l'invention destiné à coopérer pour réaliser une connexion avec le raccord de la figure 1, le deuxième raccord comportant une vanne selon l'invention ;
- la figure 3 est une vue schématique illustrant un chemin de came de la vanne selon l'invention ;
- la figure 4a est une vue de face d'un obturateur de la vanne selon l'invention en position ouverte ;
- la figure 4b est une vue de face de l'obturateur de la figure 4a en position d'obturation complète ;
- Les figures 5a à 5h sont des vues schématiques en coupe axiale illustrant une phase d'assemblage et de fonctionnement du système de connexion selon l'invention dont les éléments sont illustrés aux figures 1 et 2 ;
- Les figures 6a à 6f sont des vues schématiques en coupe longitudinale illustrant une phase de désassemblage du système de connexion selon l'invention comportant les raccords illustrés aux figures 1 et 2 ;
- La figure 7 est une vue schématique en coupe axiale d'un robinet de distribution selon l'invention comportant une vanne selon l'invention.

Pour plus de clarté, les éléments identiques ou similaires sont repérés par des signes de référence identiques sur l'ensemble des figures.

### DESCRIPTION DETAILLEE D'UN MODE DE REALISATION

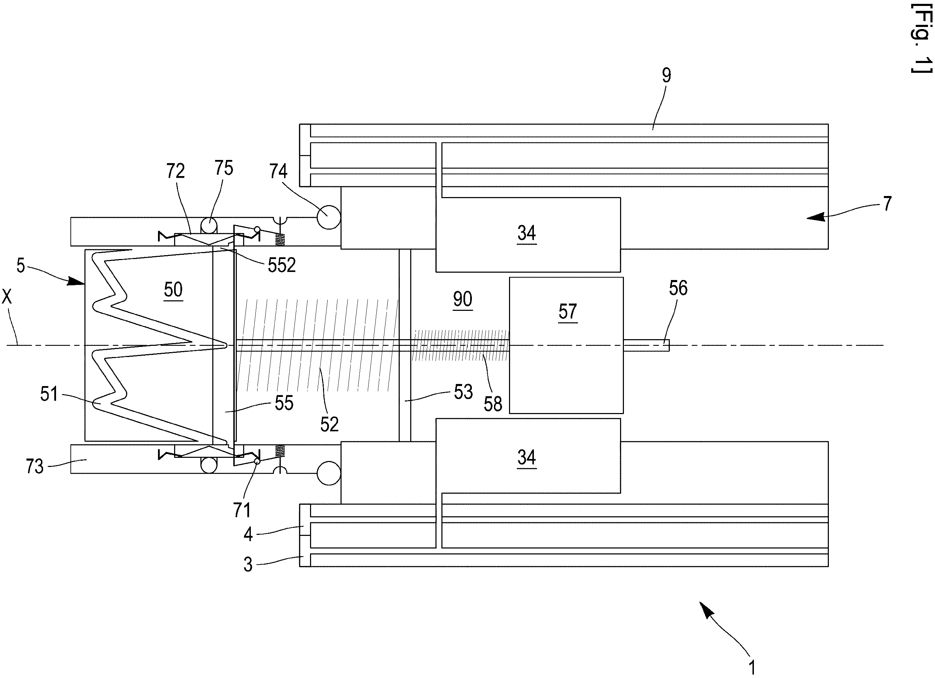

En référence aux figures 1 à 4b, nous allons décrire en détail dans un premier temps une vanne pour un circuit fluidique selon l'invention, puis un système de connexion entre des première et deuxième conduites fluidiques selon l'invention, le système de connexion comportant la vanne précitée.

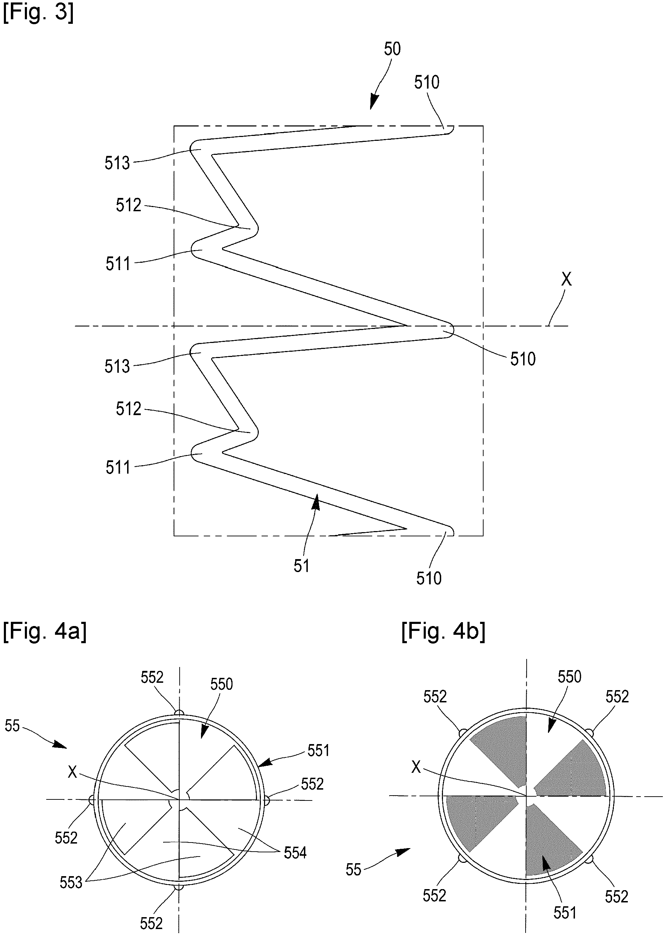

La vanne 5 pour un circuit fluidique comporte un obturateur 55. L'obturateur 55 s'étend en travers d'une section d'un tronçon 90 d'écoulement de fluide à travers la vanne 5 selon l'invention. L'obturateur 55 comporte ici deux disques ajourés coaxiaux 550, 551. Les deux disques ajourés coaxiaux 550, 551 sont montés mobiles à rotation, selon un axe de rotation X passant par un centre des disques et perpendiculaire auxdits disques ajourés coaxiaux 550, 551, l'un par rapport à l'autre et en appui l'un sur l'autre. Chacun des deux disques ajourés coaxiaux 550, 551 sont divisés par un ensemble de secteurs 553, 554 adjacents deux à deux et répartis sur une circonférence des disques ajourés coaxiaux. Ici, les secteurs 553,554 sont de l'ordre de 45° d'amplitude. Sur chacun des deux disques ajourés coaxiaux 550, 551, les secteurs 553, 554 se succèdent et sont uniformément répartis sur une circonférence de chacun des deux disques ajourés coaxiaux 550, 551. Les secteurs 553, ici au nombre de quatre, sont des secteurs vides alors que les secteurs 554, eux aussi ici au nombre de quatre, sont des secteurs pleins. Ainsi, la rotation relative du premier disque ajouré coaxial 551 par rapport au deuxième disque ajouré coaxial 550 va permettre de mettre en regard l'un de l'autre les secteurs vides 553 de chacun des disques, permettant d'obtenir un obturateur 55 en position ouverte tel qu'illustré à la figure 4a. De manière similaire, lorsque les secteurs pleins 554 des disques ajourés coaxiaux 550, 551 viennent en regard des secteurs vides 553, l'obturateur 55 est alors en position fermée puisque les secteurs vides 553 d'un des disques ajourés coaxiaux 550,551 étant obturés par les secteurs pleins 554 de l'autre des disques ajourés coaxiaux 550,551, aucun écoulement n'étant possible. Cette position de l'obturateur 55 en position fermée est illustrée à la figure 4b.

D'autre part, la vanne 5 selon l'invention comporte une paroi périphérique 50 délimitant le tronçon 90 d'écoulement de fluide de la vanne 5 selon l'invention. L'un 550 des disques ajourés coaxiaux 550, 551 est monté mobile à coulissement seul selon l'axe de rotation X dans le tronçon 90 d'écoulement de fluide de la vanne 5 selon l'invention, au niveau de la paroi périphérique 50 au sein de laquelle l'un 550 des disques ajourés 550, 551 coulisse à translation de manière étanchée avec ladite paroi périphérique 50. De plus, dans ce mouvement de coulissement seul le long de la paroi périphérique 50, l'un 550 des disques ajourés 550, 551 entraine l'autre 551 des disques ajourés 550, 551 dans le mouvement de coulissement. Ainsi, dans toutes les circonstances, les deux disques ajourés coaxiaux 550, 551 restent en permanence en appui l'un sur l'autre tout en restant mobile à rotation l'un par rapport à l'autre comme précédemment décrit.

D'autre part, l'autre 551 des disques ajourés coaxiaux 550, 551 comporte sur une circonférence radialement externe une série d'ergots 552 s'étendant en saillie depuis cette circonférence radialement externe de manière centrifuge et dans un plan défini par l'autre 551 des disques ajourés coaxiaux 550, 551. Ici, le nombre d'ergots 552 est au nombre de quatre et sont uniformément répartis sur la circonférence radialement externe de l'autre 551 des disques ajourés coaxiaux 550, 551. Ici, la série d'ergots 552 forme un suiveur de came qui prendra aussi la référence 552.

Au niveau de la paroi périphérique 50 de la vanne 5 selon l'invention, la paroi périphérique 50 comporte un chemin de came 51 qui est réalisé sur l'ensemble d'une périphérie de la paroi périphérique 50 de la vanne 5 selon l'invention. Le chemin de came 51 présente une succession d'un même motif de chemin de came que nous allons maintenant décrire. Le chemin de came 51 de la paroi périphérique 50 est destiné à coopérer avec le suiveur de came formé par les ergots 552 de l'autre 551 des disques ajourés coaxiaux 550,551. Cette coopération entre le suiveur de came 552 et le chemin de came 51 va permettre lors du coulissement de l'obturateur 55 au sein de la paroi périphérique 50 de réaliser un déplacement en rotation entre le disque ajouré coaxial 551 et l'autre disque ajouré coaxial 550 afin que ceux-ci prennent des positions relatives prédéterminées. De ce fait, il y a autant de motifs de chemin de came 51 qu'il y a d'ergots 552 formant le suiveur de came, ici au nombre de quatre. Le motif de came 51 comporte une série de points de retenue 510,511,512 et 513 qui permettent, dans leur agencement, de définir des positions prédéfinies relatives entre les deux disques ajourés coaxiaux 550,551. Comme cela est visible sur la figure 3, les différents points de retenue 510 à 513 sont positionnés à des altitudes différentes selon un axe longitudinal XX de la paroi périphérique 50 de la vanne 5 selon l'invention. Il est à noter, qu'entre chacun des points de retenue 510 à 513 adjacents, le chemin de came 51 présente une gorge rectiligne connectant deux points de retenue 510-513 adjacents l'un à l'autre. Ici illustré à la figure 3, le point de retenue 510 permet de définir une position fermée de l'obturateur 55 de la vanne 5 selon l'invention. A l'opposé, le point de retenue 512 va permettre de définir une position ouverte de l'obturateur 55 selon l'invention. Enfin, les points de retenue 511, 513 permettent de définir une position intermédiaire de l'obturateur 55 dans lequel ce dernier est dit en position déclenchée mais l'obturateur 55 reste cependant en position fermée. Les gorges rectilignes reliant deux points de retenue 510 à 513 adjacents présentent des angles avec un axe longitudinal XX de la paroi périphérique 50 qui sont agencés de sorte à être plus ouverts sur des faces internes des gorges de manière à obliger le suiveur de came 552 de suivre une gorge rectiligne prédéterminée lorsqu'il quitte l'un des points de retenue 510 - 513 de départ vers le point de retenue 510-513 qui lui est adjacent. Ainsi, par exemple, les gorges rectilignes sont agencées de telle manière que le disque ajouré coaxial 551 effectue une rotation horaire systématique lorsqu'il passe d'un point de retenue 510-513 prédéterminé vers le point de retenue adjacent à ce dernier. Ainsi le suiveur de came formé par les ergots 552 ne peut jamais revenir dans une gorge rectiligne supérieure du fait qu'une gorge rectiligne inférieure démarrant du même point de retenue 510-513 démarre avant la fin de la gorge rectiligne supérieure arrivant au point de retenue 510-513 considéré. Ainsi, dans le motif de chemin de came 51 tel qu'illustré à la figure 3, lorsqu'il y a un mouvement coulissant le long de l'axe longitudinal XX de la paroi périphérique 50, le suiveur de came 552 part par exemple du point de retenue 510 vers le point de retenue 513 sans pouvoir partir du point de retenue 510 vers le point de retenue 511. Ensuite, lors d'un mouvement de coulissement suivant, le suiveur de came 552 passera du point de retenue 513 vers le point de retenue 512, puis du point de retenue 512 vers le point de retenue 511 selon un autre mouvement de coulissement selon l'axe longitudinal XX de la paroi périphérique 50, puis dans un autre mouvement de coulissement similaire ou opposé, passera du point de retenue 511 vers le point de retenue 510 et ainsi de suite le long du chemin de came 51 défini dans la paroi périphérique 50 de la vanne 5 selon l'invention. En variante de réalisation, le suiveur de came 552 chemine de manière inverse dans le chemin de came 51, le disque ajouré coaxial 551 effectuant alors une rotation antihoraire systématique.

D'autre part, la vanne 5 selon l'invention comporte une tige de commande et de guidage 56 s'étendant selon l'axe longitudinal X de la vanne 5 selon l'invention qui se confond avec l'axe de rotation passant par un centre des disques ajourés coaxiaux 550, 551, et perpendiculaire à ces derniers. A une extrémité distale de la tige de commande et de guidage 56, l'obturateur 55 est monté sur ladite tige de commande et de guidage 56. D'autre part, la vanne 5 selon l'invention comporte des moyens de guidage 53 s'étendant en travers du tronçon 90 d'écoulement du fluide au sein de la vanne 5 selon l'invention. Par exemple, les moyens de guidage 53 sont une plaque ajourée laissant un écoulement libre et au centre duquel passe la tige de commande et de guidage 56. Les moyens de guidage 53 sont par exemple positionnés à mi-chemin entre l'extrémité distale comportant l'obturateur 55 de la tige de guidage et de commande 56 et une extrémité proximale de cette dernière. Les moyens de guidage 53 sont positionnés fixes au sein du tronçon 90 d'écoulement du fluide. Entre les moyens de guidage 53 et l'obturateur 55, la vanne 5 selon l'invention comporte des premiers moyens de rappel élastiques 52 sous la forme d'un ressort qui vont agir à l'encontre d'un coulissement des disques ajourés coaxiaux 550, 551 de l'obturateur 55 au sein de la paroi périphérique 50 de la vanne 5 selon l'invention. Les moyens de rappel élastiques 52 agissent entre les moyens de guidage 53 et la paroi périphérique 50 de la vanne 5 selon l'invention. Ainsi, dans cette configuration, les moyens de rappel élastiques 52 sont agencés de sorte que, par défaut, ils positionnent les deux disques ajourés coaxiaux 550, 551 dans la position prédéfinie de fermeture de l'obturateur 55 de la vanne 5 selon l'invention dans laquelle les deux disques ajourés obturent le tronçon 90 d'écoulement de fluide de la vanne assurant ainsi un non-écoulement du fluide contenu.

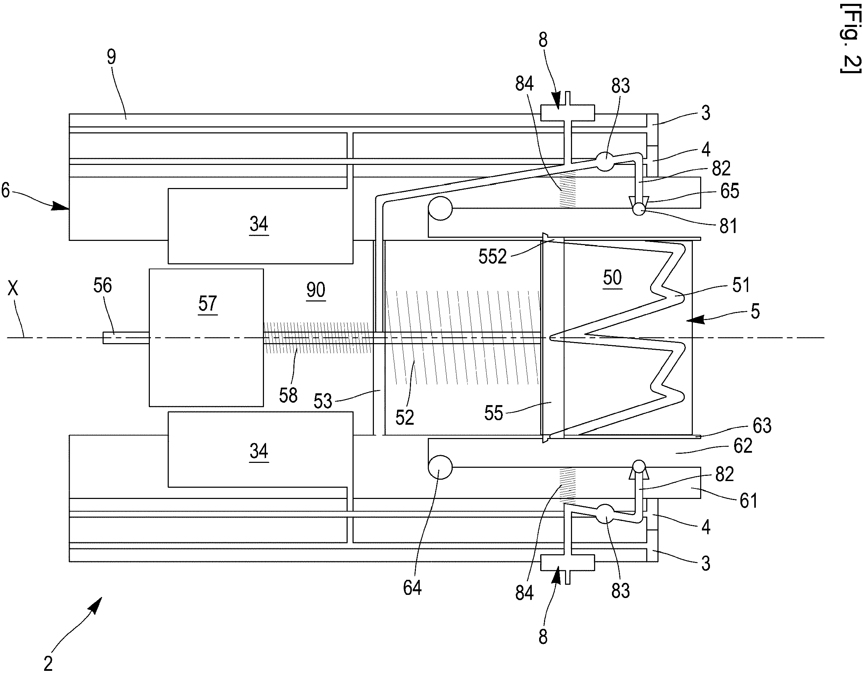

Ici illustrée aux figures 1 et 2, la vanne 5 selon l'invention comporte des moyens de motorisation 34,57 d'un fonctionnement de la vanne 5 selon l'invention illustrés ici par des moyens de motorisation 57 d'un coulissement des disques ajourés coaxiaux 550, 551 au sein du tronçon 90 d'écoulement du fluide. La tige de guidage et de commande 56 comporte à cet effet un noyau 57 d'électroaimant positionné au voisinage d'une extrémité proximale de la tige de guidage et de commande 56. D'autre part, entre le noyau 57 et les moyens de guidage 53, la vanne 5 selon l'invention comporte des deuxièmes moyens de rappel 58 agissant entre les moyens de guidage 53 et le noyau 57 d'électroaimant.

Nous allons maintenant décrire en particulier, en référence aux figures 1 et 2, un système de connexion 100 entre des première et deuxième conduites de fluide comportant un premier raccord 1 monté sur une première extrémité de la première conduite et un deuxième raccord 2 monté sur une extrémité de la deuxième conduite, les premier 1 et deuxième 2 raccords coopérant l'un avec l'autre de sorte à réaliser une connexion entre les première et deuxième conduites de fluide dont le fonctionnement sera explicité ultérieurement. Ici illustrés aux figures, à la fois le premier raccord 1 et le deuxième raccord 2 comprennent une vanne 5 selon l'invention telle que nous l'avons décrite précédemment. En variante de réalisation, l'un seulement des deux raccords 1, 2 comporte cette vanne 5 selon l'invention.

En référence à la figure 1, le premier raccord 1 comporte un bloc de raccord 7 dit mâle dans lequel est insérée une vanne 5 selon l'invention. Le bloc mâle 7 du premier raccord 1 est inséré dans une gaine 9 formant la première conduite dans laquelle ici sont aménagés des conducteurs 3, 4 permettant, d'une part, d'alimenter des électroaimants 34 coopérant avec le noyau 57 de la vanne 5 selon l'invention, ains que de fournir des informations d'éventuels capteurs positionnés mais non illustrés. D'autre part, le bloc mâle 7 du premier raccord 1 comporte, au niveau d'une extrémité distale 73, la paroi périphérique 50 de la vanne 5 selon l'invention, la paroi périphérique 50 étant montée à coulissement au sein de cette extrémité distale 73. Sur une périphérie externe en éloignement de l'extrémité distale, le bloc mâle 7 du premier raccord 1 comporte un joint d'étanchéité 74 qui viendra coopérer avec le deuxième raccord 2 que nous allons ultérieurement décrire en référence à la figure 2. D'autre part, l'extrémité distale 73 du bloc mâle 7 du premier raccord 1 comporte un écarteur 72 positionné de sorte à être toujours en regard de la paroi périphérique 50 de la vanne 5 selon l'invention inséré dans le premier raccord 1 quelle que soit la position de coulissement de la paroi périphérique 50 au sein de l'extrémité distale 73 du premier raccord 1. Un anneau de cerclage 75 est positionné en périphérie radialement externe par rapport à l'écarteur 72 et est en appui centripète sur ce dernier. D'autre part, l'extrémité distale 73 du premier raccord 1 comporte un dispositif de blocage 71 faisant office de moyen formant vérin de blocage 71 dont une première extrémité de commande s'étend en saillie d'une paroi externe de l'extrémité distale 73 et dont une autre extrémité vient au contact de l'écarteur 72.

En référence à la figure 2, le deuxième raccord 2 comporte un bloc femelle 6 comportant une extrémité distale 61 au niveau de laquelle est positionnée, de nouveau à coulissement, la paroi périphérique 50 de la vanne 5 selon l'invention qui est positionnée au sein du deuxième raccord 2. De manière similaire, le bloc femelle 6 du deuxième raccord 2 est inséré au sein d'une gaine 9 formant la deuxième conduite de fluide, cette gaine 9 étant de constitution similaire à la gaine 9 précédemment décrite au relation avec premier raccord 1 illustré à la figure 1 et en particulier des moyens de conduction électrique 3 et 4 permettant de venir en contact avec les moyens de conduction électrique 3 et 4 du premier raccord 1 lors d'un assemblage du système de connexion 100 selon l'invention. Au niveau de l'extrémité distale 61 du bloc femelle 6, ce dernier comporte une gorge 62 délimitée d'une part par une paroi externe formant l'extrémité distale 61 et une paroi interne 63 au sein de laquelle coulisse la partie périphérique 50 de la vanne 5 selon l'invention insérée au sein du deuxième raccord 2. Cette gorge 62, au fond de laquelle est positionné un joint d'étanchéité 64, est destinée à recevoir l'extrémité distale 73 du premier raccord 1 lors d'un assemblage du système de connexion 100 selon l'invention. D'autre part, le deuxième raccord 2 comporte au niveau de l'extrémité distale 61 des moyens de gâchette de déverrouillage 8 articulés au niveau d'un point d'articulation 83 et dont une première extrémité 82, vient en appui sur un deuxième anneau de cerclage 81 qui est destiné lors d'un fonctionnement à s'étendre dans la gorge 62 à partir d'une rainure latérale 65 aménagée à cet effet au sein de la gorge 62. Au droit de la gâchette 8, les moyens formant gâchette de déverrouillage comportent des moyens de rappel 84.

Dans les deux cas, que ce soit pour le premier raccord 1, comme pour le deuxième raccord 2, les électroaimants 34 des moyens de motorisation d'un coulissement de l'obturateur 55 sont ménagés au niveau de l'extrémité proximale des blocs femelle 6 et mâle 7 respectifs des premier 1 et deuxième 2 raccords.

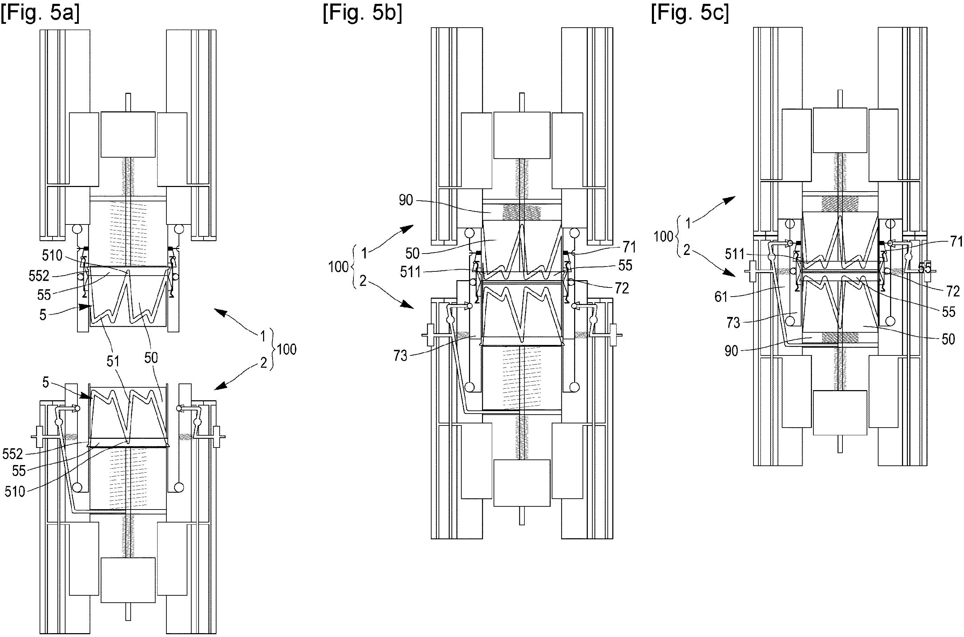

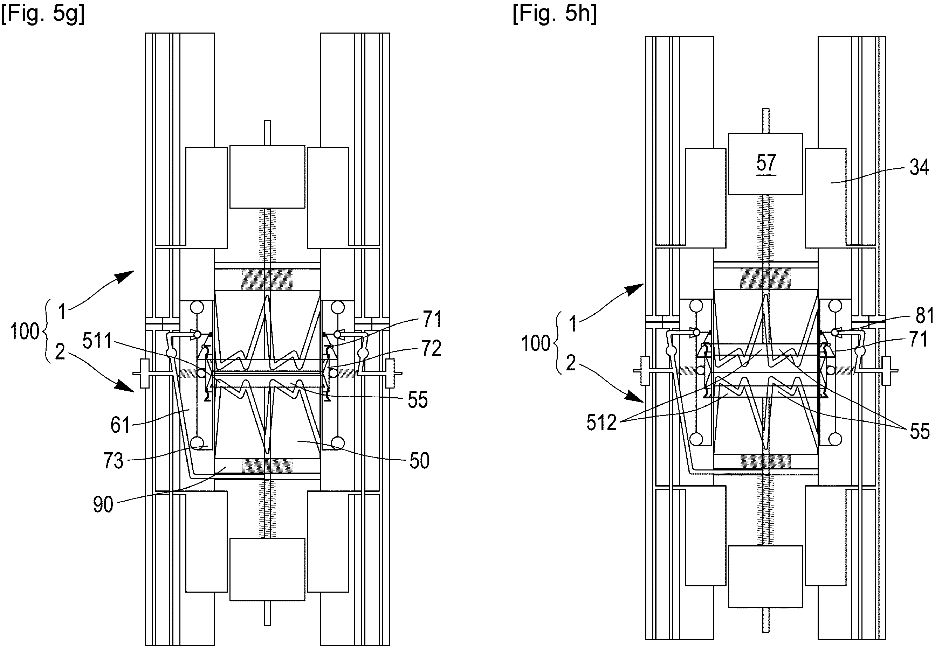

En référence aux autres figures 5A à 6f, nous allons décrire un fonctionnement du système de connexion 100 selon l'invention qui vient d'être décrit.

En référence aux figures 5a à 5h, nous allons décrire une phase d'assemblage permettant de réaliser un raccordement entre la première et la deuxième conduites de fluide avec le système de connexion 100 selon l'invention qui a été précédemment décrit. Dans un premier temps, les deux raccords 1,2 du système de connexion 100 selon l'invention sont éloignés l'un de l'autre. Il est à noter que tout ce qui va être décrit par la suite est en rapport avec la présence des moyens de motorisation 57,34 des vannes 5 selon l'invention qui sont installées respectivement dans chacun des premier 1 et deuxième 2 raccords du système de connexion 100 selon l'invention. La personne de l'art n'aura pas de difficulté à imaginer et à comprendre un fonctionnement manuel sans ces moyens de motorisation d'un système de connexion 100 selon l'invention ne comportant pas ces dits moyens de motorisation.

Dans une première phase illustrée à la figure 5a, les premier et deuxième raccords 1 et 2 sont éloignés l'un de l'autre et chaque obturateur 55 est dans une position de fermeture telle qu'illustrée à la figure 4b et donc les suiveurs de came 552 sont positionnés au niveau des points de retenue 510 du chemin de came 51 aménagé dans les parois périphériques 50 de chacune des vannes 5 selon l'invention. Cette position des suiveurs de came 552 au niveau des points de retenue 510 du chemin de came 51 est réalisée et maintenue par les moyens de rappel 52 de chacune des vannes 5 ménagées dans les premier 1 et deuxième 2 raccords du système de connexion selon l'invention.

Dans un deuxième temps, illustrés à la figure 5b, l'assemblage et la connexion des premier 1 et deuxième 2 raccords débutent. Dans cette situation, comme illustrée, l'extrémité distale 73 du premier raccord 1 pénètre dans la gorge 62 du deuxième raccord 2. En même temps, la paroi périphérique 50 de la vanne 5 selon l'invention ménagée dans le deuxième raccord 2 est poussée à l'intérieur du premier raccord 1 et vient en appui sur la paroi périphérique 50 de la vanne 5 selon l'invention ménagée dans le premier raccord 1. Ainsi, la paroi périphérique 50 de la vanne 5 du premier raccord 1 est poussée à coulissement au sein du tronçon 90 alors que l'obturateur 55 de la vanne 5 selon l'invention ménagée dans le premier raccord 1 est immobilisée à l'encontre d'un coulissement au sein de l'écarteur 72, retenu par les moyens formant vérin de blocage 71. Ainsi les ergots formant le suiveur de came 552 de l'obturateur 55 de la vanne 5 ménagée dans le premier raccord 1 passe du point de retenue 510 du chemin de came 51 associé et se déplace vers le point 511 mettant ledit obturateur 55 en position déclenchée mais toujours fermée empêchant tout écoulement de fluide. Pendant ce temps, l'obturateur 55 de la vanne 5 ménagé dans le deuxième raccord 2 reste en position de fermeture, les ergots 552 associés étant maintenus au niveau du point de retenue 510 du chemin de came 51 associé.

Dans une phase suivante, illustrée à la figure 5c, le mouvement de raccordement se poursuit dans lequel l'extrémité distale 73 continue à pénétrer dans la gorge 62 de l'extrémité distale 61 du deuxième raccord 2 jusqu'à atteindre le fond de ladite gorge 62. Durant cette phase d'assemblage illustrée à la figure 5c, c'est au tour de la paroi périphérique 50 de la vanne 5 du deuxième raccord 2 qui est mis en mouvement de coulissement au sein du tronçon 90 associé amenant alors le suiveur de came 552 de l'obturateur 55 qui lui est associé vers le point de retenue 511 du chemin de came 51 de la paroi périphérique 50 de la vanne 5 selon l'invention ménagé dans le deuxième raccord 2. Ainsi les deux obturateurs 55 de chacune des vannes 5 selon l'invention ménagés dans chacun des raccords 1 et 2 sont en position déclenchée tout en restant fermés. En effet, cela est possible car les moyens formant vérins de blocage 71 maintiennent en position l'obturateur 55 de la vanne 5 selon l'invention du premier raccord 1 obligeant un coulissement de la paroi périphérique 50 de la vanne 5 selon l'invention ménagé dans le deuxième raccord.

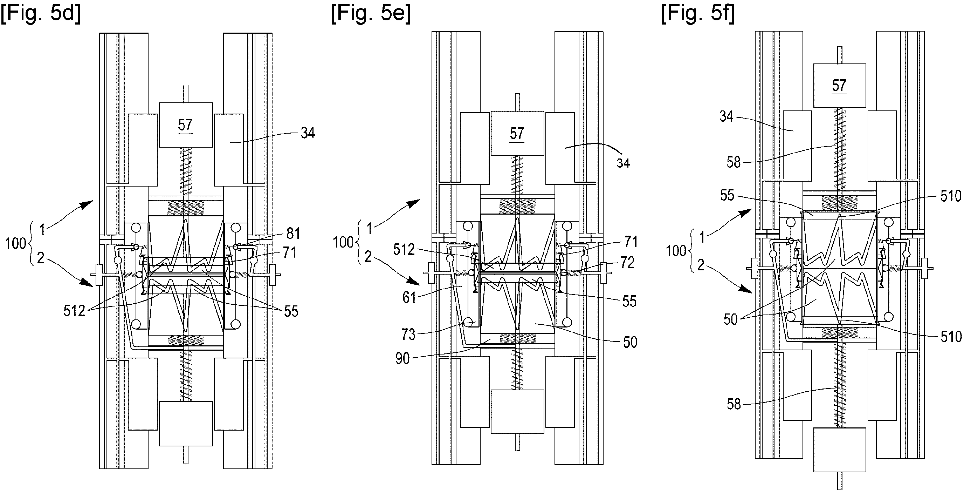

Dans une phase suivante, illustrée à la figure 5d, le deuxième anneau de cerclage 81 ménagé dans le deuxième raccord 2 vient en appui sur les moyens formant vérins de blocage 71 permettant d'une part de verrouiller le deuxième raccord 2 dans le premier raccord 1 et de venir libérer les deux obturateurs 55 de leur position déclenchée permettant grâce à l'action des moyens de rappel 52 de faire passer les suiveurs de came 552 respectifs de points de retenue 511 vers le point de retenue 512 dans lequel les obturateurs 55 sont chacun en position ouverte laissant le fluide s'écouler à travers eux. Ainsi, il est assuré que l'ouverture des obturateurs 55 ne se fait qu'une fois les deux raccords 1 et 2 parfaitement assemblés. Ensuite, dans les phases suivantes illustrées aux figures 5e à 5h, il sera possible grâce aux moyens de motorisation 34,57 de chacune des vannes 5 selon l'invention aménagée respectivement dans le premier raccord 1 et le deuxième raccord 2 de pouvoir ouvrir et ou fermer de manière alternative et continue éventuellement les obturateurs 55 respectifs sans avoir à déconnecter ou reconnecter le premier raccord 1 avec le deuxième raccord 2. Par exemple, illustrée à la figure 5e, une impulsion électrique dans les électroaimants 34 de chacune des vannes 5 selon l'invention comprime chacun des moyens de rappel associés 58 en appliquant une attraction électromagnétique sur le noyau 57 fixé à l'extrémité proximale de la tige de guidage et de commande 56 liée à chacun des obturateurs 55 des vannes 5 selon l'invention. Dans cette situation, chacun des suiveurs de came 552 passe des points de retenue 512 vers le point de retenue 513 dans lequel les deux obturateurs 55 seront de nouveau en position déclenchée. Puis à l'arrêt de l'impulsion électrique au sein des électroaimants 34, la force électromagnétique ne s'appliquant plus sur chacun des noyaux 57, les moyens de rappel 58 prennent le relais, amenant automatiquement les ergots formant suiveur de came 552 du point de retenue 513 sur lequel il était positionné vers le point de retenue 510 dans lequel les obturateurs 55 respectifs se retrouvent alors en position fermée coupant l'écoulement du fluide au sein du système de connexion 100 selon l'invention. Cette situation est illustrée à la figure 5f. Ensuite, une nouvelle impulsion au sein des électroaimants 34, identique ou similaire à celle qui avait été appliquée lors de la phase illustrée à la figure 5e permet de faire de nouveau passer les d'ergots formant suiveur de came 552 de la position retenue 510 dans laquelle les obturateurs 55 sont fermés vers la position de retenue 511 dans laquelle les deux obturateurs 55 se retrouvent alors dans la position déclenchée. Ensuite comme illustrée à la figure 5h, l'impulsion électrique est coupée au sein des électroaimants 34 et les ressorts formant moyens de rappel 58 font passer les suiveurs de came 552 de la position de retenue 511 vers la position de retenue 512 dans laquelle les obturateurs 55 se retrouvent en position ouverte, l'écoulement étant de nouveau possible au sein du système de connexion 100 selon l'invention.

Ainsi qu'il est possible d'ouvrir ou de fermer le débit au sein du système de connexion 100 selon l'invention de manière simple grâce à la présence des moyens de motorisation 34,57 sans avoir à déconnecter d'une manière ou d'une autre les premier 1 et deuxième 2 raccords l'un avec l'autre. Chacune des impulsions impliquées dans les électroaimants 34 permet de fermer ou d'ouvrir le débit au sein du système de connexion 100 selon l'invention de manière alternative et infinie sans avoir à déconnecter le système de connexion 100 selon l'invention.

Il ressort de ce qui précède qu'alternativement lors de la phase de connexion, les parois périphériques 50 respectivement des vannes 5 selon l'invention ménagées dans les premier 1 et deuxième 2 raccords du système de connexion 100 selon l'invention forment des moyens de mise en mouvement du suiveur de came 552 le long du chemin de la came 51 de l'autre vanne 5 selon l'invention.

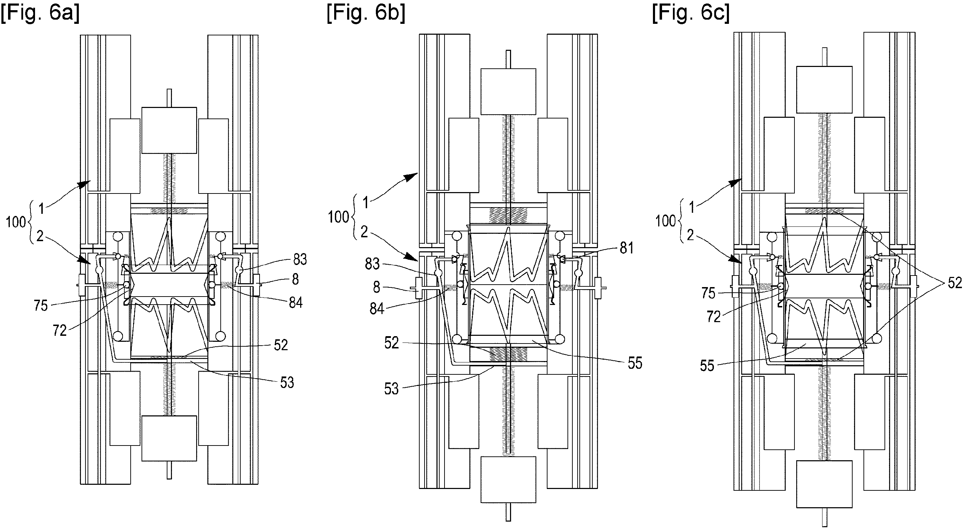

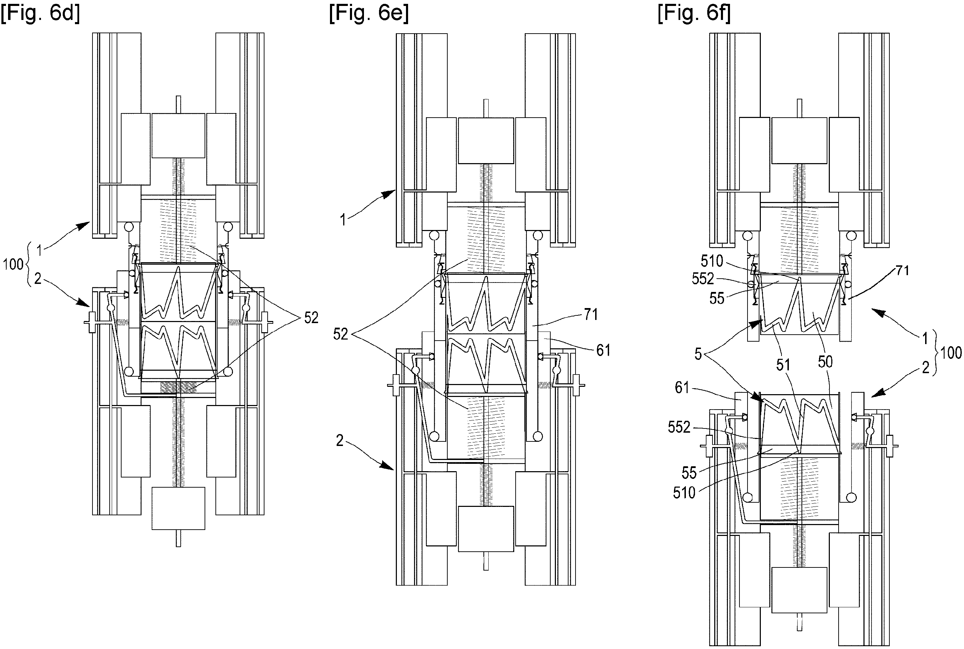

Maintenant, en référence aux figures 6a à 6f, nous allons décrire une phase de désassemblage du système de connexion 100 selon l'invention.

Pour séparer le premier raccord 1 du deuxième raccord 2 alors assemblés l'un avec l'autre pour réaliser le système de connexion 100 selon l'invention, une pression doit être opérée sur les gâchettes de déverrouillage 8. Or, la conformité des gâchettes de déverrouillage 8 articulées autour d'un point de l'articulation 83 comporte un bras qui est radialement au droit de la gâchette de déverrouillage 8 et qui vient en appui sur l'anneau de cerclage 75 se resserrant lui-même sur les écarteurs 72. En effet, sans cet appui sur les gâchettes 8, la force de rappel des moyens de rappel 52 est suffisante pour compenser jusqu'alors la pression de l'anneau de cerclage 75 sur les écarteurs 72 qui restaient au fond de la gorge qui les recevait du bloc mâle 7. De ce fait, grâce à cet appui sur les gâchettes de déverrouillage 8, les deux parois périphériques 50 respectivement des vannes 5 selon l'invention du premier raccord 1 et du deuxième raccord 2 sont déplacées vers les moyens de guidage 53 respectifs faisant passer le suiveur de came 552 de point de retenue 512 vers le point de retenue 513 dans lequel les deux obturateurs 55 sont en position déclenchée et obturée. Cette situation est illustrée à la figure 6a.

Dans une phase suivante illustrée à la figure 6b, la pression exercée sur les gâchettes de déverrouillage 8 est annulée, le deuxième anneau de cerclage 81 du bloc femelle 6 est directement libéré permettant à la poussée des ressorts formant les moyens de rappel 52 sur leurs parois périphériques 50 respectives d'amorcer la séparation du premier raccord 1 du deuxième raccord 2 en le faisant coulisser l'un par rapport à l'autre. Concomitamment à ceci, sous l'effet des moyens de rappel 58, les suiveurs de came formés par les ergots 552 de chacun des obturateurs 55 passent alors de la position de retenue 513 vers la position de retenue 510 du chemin de came 51 respectif et se retrouvent alors en position verrouillée d'obturation prêts à assurer un non-écoulement au sein du tronçon 90 respectif. Les deux débits étant alors annulés par la fermeture des obturateurs 55 respectifs, la séparation des premier 1 et deuxième 2 raccords se poursuit et sans risque de fuite.

Le fonctionnement de la séparation est similaire même si préalablement au déclenchement du désassemblage, les obturateurs 55 sont en position fermée tel qu'illustré à la figure 6c. Quelle que soit la position initiale des obturateurs 55 respectifs des premier 1 et deuxième 2 raccords, lesdits obturateurs 55 sont toujours et se retrouvent toujours en position d'obturation avant que la séparation soit définitive entre les premier 1 et deuxième 2 raccords, la séparation des deux raccords se poursuivant sous l'effet des moyens de rappel 52 de chacune des vannes 5 selon l'invention ménagées dans le premier raccord 1 et le deuxième raccord 2, comme cela est illustré à la figure 6d.

La séparation se poursuit par coulissement de l'extrémité distale 73 au sein de la gorge 62 ménagée dans l'extrémité distale 61 du deuxième raccord 2, les obturateurs 55 restant en position d'obturation, les ergots 552 formant les suiveurs de came étant maintenus dans les points de retenue 510 ménagés dans les chemins de came 51 de chacune des parois périphériques 50 associées. La poursuite de cette séparation est illustrée dans les figures 6e à 6f.

Il ressort de ce qui précède, dans la version dans lesquels des moyens de conduction électriques 3,4 sont ménagés dans les gaines 9 formant les première et deuxième conduites de fluide, cela permet, une fois la connexion parfaitement réalisée entre le premier raccord 1 et le deuxième raccord 2 au sein du système de connexion 100 selon l'invention, de transmettre les signaux entre les première et deuxième conduites de fluide une fois l'assemblage réalisé. Ainsi, chaque composant est relié et connecté à la fois sur le plan fluidique mais également sur le plan électronique/électrique permettant la transmission d'informations le long des conduites de fluide. Ainsi, il est possible de ménager dans ces conduites de fluide des instruments mesurant notamment la pression, la température et le débit qui peuvent être intégrés par exemple à l'un des deux raccords 1 et 2 du système de connexion 100 selon l'invention et non illustrés. Ainsi, les relevés de ces instruments peuvent être transmis via les contacteurs 3,4 de proche en proche jusqu'à ce qu'une unité centrale qui traite et envoie des données issues de ces instruments. Ainsi, en fonction de ces relevés, l'unité centrale pourra, par exemple, envoyer à son tour un signal pour activer la fermeture d'un des raccords 1,2 en pilotant le moyen de motorisation 34,57 associé à la vanne 5 selon l'invention qui lui est intégrée. De plus, via les contacteurs électriques 3,4, des informations permanentes comme l'identification du raccord et éventuellement de l'organe raccordé peuvent également être intégrées pour obtenir la configuration et l'organisation complète du circuit dans lequel sont intégrés des systèmes de connexion 100 selon l'invention.

D'autre part, l'utilisation de moyens de motorisation comme des électroaimants 34,57 ne nécessitent l'utilisation que de très courtes impulsions électriques pour, sans avoir à désassembler le système de connexion 100 selon l'invention, ouvrir ou fermer les obturateurs 55 associés aux vannes 5 selon l'invention intégrées dans ledit système de connexion 100 selon l'invention. Enfin, la structure des vannes 5 selon l'invention qui viennent d'être décrites et intégrées au système de connexion 100 selon l'invention permet d'assurer une coupure automatique de débit quelle que soit la situation et par exemple en l'absence de courant électrique au sein des contacteurs 3,4 alimentant les moyens de motorisation de ladite vanne 5 selon l'invention. Effectivement, la force mécanique issue des moyens de rappel intégrés à la vanne 5 selon l'invention est suffisante pour assurer et garantir instantanément une mise en position fermée des obturateurs 55 de la vanne 5 selon l'invention lors d'un déverrouillage en particulier du raccord.

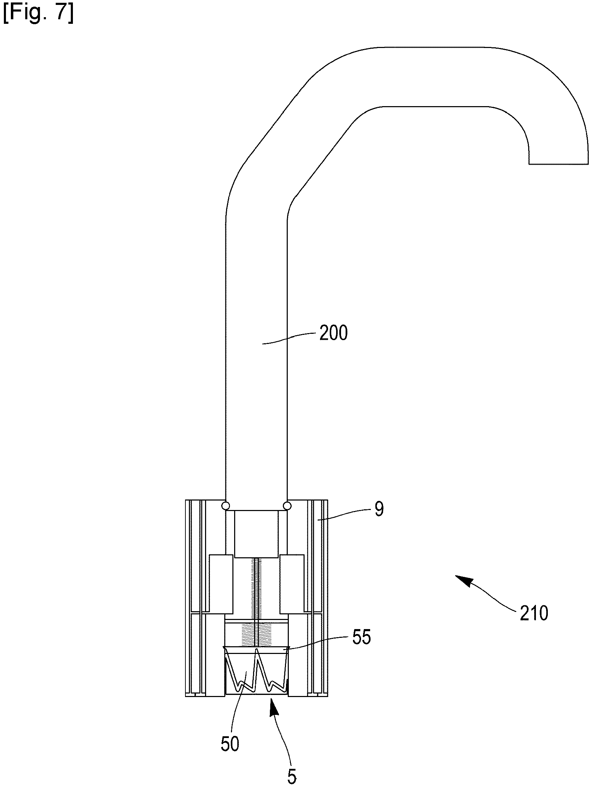

En référence brève à la figure 7, est illustré un robinet de distribution 210 pour un circuit fluidique dans lequel a été intégrée une vanne 5 selon l'invention. Par exemple, le col de cygne 200 du robinet de distribution 210 est monté solidaire sur l'extrémité distale de la tige de commande et de guidage 56 permettant à un utilisateur du robinet par un simple appui sur le col de cygne de réaliser un coulissement selon l'axe de la tige de commande et de guidage 56 et de faire passer l'obturateur 55 de la vanne 5 intégrée mécaniquement et manuellement entre une position ouverte dans laquelle le fluide s'écoule par le col de cygne et une position fermée dans laquelle il n'y a plus d'écoulement au sein du col de cygne 200. D'autre part, il est possible de conserver les moyens de motorisation 34,57 pour automatiser l'ouverture ou non de l'obturateur 55 de la vanne 5 selon l'invention intégrée au robinet de distribution 210 illustré.

Bien entendu, il est possible d'apporter à l'invention de nombreuses modifications sans pour autant sortir du cadre de celle-ci.

## Revendications

1. Vanne (5) pour un circuit fluidique comportant un obturateur (55) comprenant deux disques ajourés coaxiaux (550,551) montés mobiles à rotation, selon un axe de rotation (X) passant par un centre des disques et perpendiculaire aux disques, l'un par rapport à l'autre et en appui l'un sur l'autre, l'obturateur s'étendant en travers d'une section d'un tronçon (90) d'écoulement de fluide de la vanne, l'un des disques ajourés étant monté mobile à coulissement seul selon l'axe de rotation dans le tronçon de manière étanchée avec une paroi périphérique (50) du tronçon et entrainant l'autre des disques ajourés dans le coulissement, **caractérisé en ce que** l'autre des disques ajourés comporte un suiveur de came (552) et la paroi périphérique du tronçon comporte un chemin de came (51), le suiveur de came coopérant avec le chemin de came de sorte à positionner les deux disques ajourés l'un par rapport à l'autre dans des positions prédéfinies relatives lors d'un mouvement de rotation des disques ajourés l'un par rapport à l'autre.

2. Vanne selon la revendication 1, **caractérisée en ce que** les deux disques ajourés comprennent des ouvertures complémentaires (553) agencées de sorte à venir en regard l'une de l'autre dans au moins une des positions prédéfinies relatives.

3. Vanne selon la revendication 1 ou 2, **caractérisé en ce que** le chemin de came comporte des points de retenue (510,511,512,513) du suiveur de came agencés de sorte à maintenir des positions prédéfinies relatives entre les deux disques ajourés.

4. Vanne selon l'une des revendications 1 à 3, **caractérisée en ce que** la vanne comporte en outre des moyens de rappel élastiques (52,58) agissant à l'encontre d'un coulissement des disques ajourés dans le tronçon.

5. Vanne selon la revendication 4, **caractérisée en ce que** les moyens de rappel élastiques sont agencés de sorte à positionner les deux disques ajourés dans une position prédéfinie de fermeture dans laquelle les deux disques ajourés obturent le tronçon d'écoulement de fluide de la vanne.

6. Vanne selon l'une des revendications 1 à 5, **caractérisée en ce que** la vanne comprend une tige de commande et de guidage (56) d'un coulissement des disques ajourés dans le tronçon.

7. Vanne selon la revendication 6, **caractérisé en ce que** la tige de commande et de guidage comporte des moyens de motorisation (34,57) d'un coulissement des disques ajourés dans le tronçon.

8. Vanne selon la revendication 7, **caractérisée en ce que** les moyens de motorisation comportent un électroaimant (34).

9. Vanne selon la revendication 8, **caractérisée en ce qu'**une portion de la tige de commande et de guidage forme ou comporte un noyau de l'électroaimant (57).

10. Système de connexion (100) entre des première et deuxième conduites de fluide comportant un premier raccord (1) monté sur une extrémité de la première conduite et un deuxième raccord (2) monté sur une extrémité de la deuxième conduite, les premier et deuxième raccords coopérant l'un avec l'autre de sorte à réaliser une connexion entre les première et deuxième conduites de fluide, **caractérisé en ce que** l'un parmi les premier et deuxième raccords comporte une première vanne (5) selon l'une des revendications 1 à 9.

11. Système de connexion selon la revendication 10, **caractérisé en ce que** l'autre parmi les premier et deuxième raccords comprend des moyens de mise en mouvement (50) du suiveur de came le long du chemin de came de la première vanne, lors d'une réalisation d'une connexion entre les première et deuxième conduites de fluide.

12. Système de connexion selon la revendication 10 ou 11, **caractérisé en ce que** l'autre parmi les premier et deuxième raccords comporte une deuxième vanne (5) selon l'une des revendications 1 à 9.

13. Système de connexion selon la revendication 12, **caractérisé en ce que** la deuxième vanne comporte les moyens de mise en mouvement (50) du suiveur de came le long du chemin de came de la première vanne, lors d'une réalisation d'une connexion entre les première et deuxième conduites de fluide.

14. Système de connexion selon la revendication 13, **caractérisé en ce que** les moyens de mise en mouvement du suiveur de came le long du chemin de came de la première vanne, lors d'une réalisation d'une connexion entre les première et deuxième conduites de fluide, sont agencés de sorte à mettre en mouvement le suiveur de came le long du chemin de came de la deuxième vanne, lors de la réalisation de ladite une connexion entre les première et deuxième conduites de fluide.

15. Robinet de distribution (210) pour un circuit fluidique, **caractérisé en ce qu'**il comporte une vanne (5) selon l'une des revendications 1 à 9.
